# EUROPEAN PATENT APPLICATION

(11) **EP 3 812 149 A1**
(43) Date of publication of application: **28.04.2021**
(21) Application number: 20203158.9
(22) Date of filing: 21.10.2020
(51) Int. Cl.: B32B 27/18, B32B 7/12, B32B 15/08, B32B 15/20, B32B 27/06, B32B 27/08, B65D 65/40

(54) **SECONDARY BATTERIE POUCH FILM CONTAINING GRAPHENE**

(30) Priority: 23.10.2019 KR 20190131981; 13.10.2020 KR 20200131683
(71) Applicant: Korea Aluminium Co., Ltd, Chungcheongbuk-do 27904 (KR)
(72) Inventor: HEO, Chung Hyeon, 28326 Chungcheongbuk-do (KR); PARK, Yong Soon, 28747 Chungcheongbuk-do (KR); KANG, Tae Woon, 27341 Chungcheongbuk-do (KR)
(74) Representative: Manitz Finsterwald Patent- und Rechtsanwaltspartnerschaft mbB

(57) **Abstract**

The present application relates to a secondary battery pouch film containing graphene and a method for manufacturing the secondary battery pouch film.

## Description

### BACKGROUND OF THE INVENTION

### 1. Field of the Invention

The present application relates to a secondary battery pouch film containing graphene and a method for manufacturing the secondary battery pouch film.

### 2. Description of the Related Art

A secondary battery pouch for packaging a secondary battery including a lithium secondary battery is used as an exterior material for packaging the secondary battery. The secondary battery pouch is configured in a form in which an aluminum thin film is interposed in order to protect a battery cell made of an electrode assembly and an electrolyte introduced into an inside by a subsequent process, to supplement the electrochemical properties of the battery cell, and to improve heat dissipation. In addition, in order to protect the battery cell from external impact, an outer layer of a functional polymer film is formed on the aluminum thin film.

The pouch-type secondary battery may be damaged for various reasons in various processes. For example, in a process of accommodating the electrode assembly inside the pouch, a protrusion portion such as an electrode tab or an electrode lead causes damage such as a crack to a sealant layer inside the pouch, and the aluminum layer may be exposed due to the damage. In addition, in a case where the pouch is sealed, heat is applied from the outside, and even with such heat, a fine pinhole is generated or the pouch suffers an internal injury, causing cracks in an inner adhesive layer, and thereby the aluminum layer may be exposed to the electrolyte or the like. In addition, an adhesive layer formed in a form of a thin film may be damaged by dropping, impact, pressure, or compression, or the like, and the aluminum layer is exposed to the electrolyte or the like through the damaged portion of the adhesive layer. The aluminum layer exposed to the electrolyte may be corroded by causing a chemical reaction between the electrolyte, which is penetrated or diffused into the battery, and oxygen or moisture, and thereby, there is a problem that corrosive gas is generated, causing a swelling phenomenon to expand the inside of the battery. More specifically, LiPF₆ may react with water and oxygen to generate hydrofluoric acid (HF) which is a corrosive gas. Such hydrofluoric acid may react with aluminum to cause a rapid exothermic reaction, and when hydrofluoric acid is adsorbed to the aluminum surface and penetrates into the tissue as a secondary reaction, brittleness of the tissue is increased, causing cracks in the pouch film even with a micro impact, resulting in leakage of the electrolyte. As a result, lithium and the atmosphere may react, causing ignition.

Therefore, as described above, in order to prevent contact with aluminum even when corrosive hydrofluoric acid is generated, various aluminum surface modification techniques have been studied. However, since the capacity of the secondary battery has been gradually increasing in recent years, there is a limit to solving the above problems only by surface modification of aluminum, and a need for an aluminum pouch film for the secondary battery that is excellent in heat resistance, chemical resistance, and durability is constantly emerging.

### [Prior Technical Literature]

### [Patent Literature]

Korean Patent Publication No. 10-2013-0081445.

### DISCLOSURE OF THE INVENTION

### PROBLEMS TO BE SOLVED BY THE INVENTION

The present application provides a secondary battery pouch film, which includes a sealant layer, a primer layer, an adhesive layer, a core layer, and a surface layer, and is capable of further containing graphene in each layer excluding the core layer, and a method for manufacturing the retort food packaging film.

However, problems to be solved by the present application is not limited to the problem described above, and other problems that are not mentioned will be clearly understood by those skilled in the art from the following description.

### MEANS FOR SOLVING THE PROBLEMS

A first aspect of the present application provides a secondary battery pouch film including: a sealant layer; a first adhesive layer formed on the sealant layer; a primer layer formed on the first adhesive layer; a core layer formed on the primer layer; a second adhesive layer formed on the core layer; and a surface layer formed on the second adhesive layer, wherein at least one layer from the sealant layer, the primer layer, the first adhesive layer, the second adhesive layer, and the surface layer includes graphene.

A second aspect of the present application provides a method for manufacturing the secondary battery pouch film according to claim 1 including: forming each of a sealant layer, a core layer, and a surface layer; and laminating the sealant layer, the core layer, and the surface layer in order, wherein a first adhesive layer and a primer layer are included between the sealant layer and the core layer, and a second adhesive layer is included between the core layer and the surface layer, and wherein at least one layer from the sealant layer, the primer layer, the first adhesive layer, the second adhesive layer, and the surface layer includes graphene.

### EFFECTS OF THE INVENTION

In the secondary battery pouch film according to implement examples of the present application, one or more of the sealant layer, the primer layer, the inner resin layer, the first adhesive layer, the second adhesive layer, the third adhesive layer, and the surface layer contains graphene, so that even if a thickness of the core layer is thin compared to a thickness of the aluminum layer of the conventional packaging material for the secondary battery pouch, the core layer can be implemented as the secondary battery pouch. There are effects of an increase in mechanical strength, an increase in barrier property of moisture, oxygen, or the like, and an increase in chemical resistance, thereby increasing flame resistance and impact resistance, and there is an advantage of remarkably reducing an amount of aluminum used. In addition, even in a case where only one of the sealant layer, the primer layer, the inner resin layer, the first adhesive layer, the second adhesive layer, the third adhesive layer, and the surface layer includes graphene, the desired effects described above can be exhibited, and even in a case where only two or all of the layers includes graphene, the desired effects described above can be exhibited.

### BRIEF DESCRIPTION OF THE DRAWINGS

FIG. 1 is a schematic view illustrating a secondary battery pouch film according to an implement example of the present application;
FIG. 2 is a schematic view illustrating a secondary battery pouch film according to an implement example of the present application;
FIG. 3 is a photograph illustrating a secondary battery pouch film according to an example of the present application; and
FIG. 4 is a graph illustrating a measurement of a depth of molding burst of the secondary battery pouch film according to a content of graphene in an example of the present application.

### DETAILED DESCRIPTION OF THE EMBODIMENTS

Hereinafter, implement examples and examples of the present application will be described in detail with reference to the accompanying drawings so that those ordinary skilled in the art may easily implement the present invention. However, the present application may be implemented in various different forms, and is not limited to the implement examples and the examples described herein. In the drawings, portions irrelevant to the description are omitted in order to clearly describe the present invention, and similar reference numerals are assigned to similar portions throughout the specification.

Throughout the specification of the present application, when a portion is "connected" to another portion, it includes not only "directly connected", but also "electrically connected" with an element interposed therebetween.

Throughout the specification of the present application, when a member is said to be positioned "on" another member, this includes not only a case where the member is in contact with the other member, but also a case where another member exists between the two members.

Throughout the specification of the present application, when a certain portion "includes" a certain component, it means that other components may be further included rather than being excluded unless specifically stated to the contrary.

As used in the present specification, the terms "about", "substantially", and the like are used in or close to a numerical value when manufacturing and material tolerances specific to the stated meaning are presented, and in order to aid understanding of the present application, accurate or absolute numerical values are used to prevent unreasonable use of the stated disclosure by unconscionable infringers.

As used throughout the specification of the present application, the term "step to" or "step of' does not mean "step for".

Throughout the specification of the present application, the term "combination(s) thereof' included in the expression of the Markush format refers to one or more mixtures or combinations selected from a group consisting of components described in the expression of the Markush format, and it means to include one or more selected from the group consisting of the components described above.

Throughout the specification of the present application, the description of "A and/or B" means "A or B, or A and B".

Throughout the present specification of the present application, the term "graphene" means that a plurality of carbon atoms are covalently connected to each other to form a polycyclic aromatic molecule, and the carbon atoms connected by the covalent bond form a 6-membered ring as basic repeating unit, but it is also possible to further include a 5-membered ring and/or a 7-membered ring. Therefore, the sheet formed by the graphene may be viewed as a single layer of carbon atoms covalently bonded to each other, but is not limited thereto. The sheet formed by the graphene may have various structures, and such a structure may vary depending on a content of the 5-membered ring and/or the 7-membered ring that may be included in the graphene. In addition, in a case where the sheet formed by the graphene is formed of a single layer, the single layers may be stacked on each other to form a plurality of layers, and an end portion of a side surface of the graphene sheet may be saturated with hydrogen atoms, but is not limited thereto.

Throughout the specification of the present application, the term "graphene oxide" may be abbreviated as "GO". A structure may be included in the present invention in which a functional group containing oxygen such as a carboxyl group, a hydroxy group, or an epoxy group is bonded on the single-layered graphene, but is not limited thereto.

Throughout the specification of the present application, the term "reduced graphene oxide" means graphene oxide of which an oxygen ratio is reduced through a reduction process, and may be abbreviated as "rGO", but is not limited thereto.

Throughout the specification of the present application, the term "Graphene Nano Platelet" means a material having 10 to 100 carbon layers manufactured by a physical or chemical method of natural graphite and may be abbreviated as "GNP", but is limited thereto.

Hereinafter, implement examples and examples of the present application will be described in detail with reference to the accompanying drawings. However, the present application is not limited to the implement examples, the examples, and the drawings.

A first aspect of the present application provides a secondary battery pouch film including: a sealant layer; a first adhesive layer formed on the sealant layer; a primer layer formed on the first adhesive layer; a core layer formed on the primer layer; a second adhesive layer formed on the core layer; and a surface layer formed on the second adhesive layer, wherein at least one layer from the sealant layer, the primer layer, the first adhesive layer, the second adhesive layer, and the surface layer includes graphene.

In an implement example of the present application, an inner resin layer formed on the second adhesive layer and a third adhesive layer formed on the inner resin layer between the second adhesive layer and the surface layer may be further included, and each or both of the inner resin layer and the third adhesive layer includes graphene.

Specifically, in the secondary battery pouch film according to an implement example of the present application, at least one layer from the sealant layer, the primer layer, the inner resin layer, the first adhesive layer, the second adhesive layer, the third adhesive layer, and the surface layer includes graphene. Therefore, even if the thickness of the core layer is thin, it may be used as the secondary battery pouch film. In addition, there are effects of an increase in mechanical strength, an increase in barrier property of moisture, oxygen, or the like, and an increase in chemical resistance, thereby increasing flame resistance and impact resistance. In addition, in a case where only one of the sealant layer, the primer layer, the inner resin layer, the first adhesive layer, the second adhesive layer, the third adhesive layer, and the surface layer contains graphene, the desired effects described above can be exhibited, and even in a case where only two or all of the layers includes graphene, the desired effects described above can be exhibited.

In an implement example of the present application, the thickness of the core layer may be about 12 µm to about 80 µm. Specifically, the thickness of the core layer may be about 12 µm to about 80 µm, about 12 µm to about 60 µm, about 12 µm to about 55 µm, about 12 µm to about 50 µm, about 12 µm to about 45 µm, about 12 µm to about 40 µm, about 12 µm to about 35 µm, about 12 µm to about 30 µm, about 15 µm to about 80 µm, about 15 µm to about 60 µm, about 20 µm to about 60 µm, about 25 µm to about 60 µm, about 30 µm to about 60 µm, about 20 µm to about 50 µm, about 25 µm to about 50 µm, about 30 µm to about 50 µm, about 35 µm to about 45 µm, or about 40 µm to about 45 µm, but is limited thereto. The secondary battery pouch film of the related art had durability that can be implemented as a pouch film material only when the core layer has a thickness of at least 50 µm, but the secondary battery pouch film according to an implement example of the present application has the thickness of the core layer less than 50 µm, and at least 5 µm, there is an effect of having durability that can be implemented as a pouch film material.

In an implement example of the present application, the thickness of the sealant layer may be about 30 µm to about 100 µm. Specifically, the thickness of the sealant layer may be about 30 µm to about 100 µm, about 40 µm to about 100 µm, about 40 µm to about 90 µm, about 40 µm to about 80 µm, about 40 µm to about 70 µm, about 40 µm to about 60 µm, about 50 µm to about 100 µm, about 60 µm to about 100 µm, about 70 µm to about 100 µm, about 80 µm to about 100 µm, about 50 µm to about 90 µm, about 50 µm to about 80 µm, or about 60 µm to about 80 µm, but is not limited thereto.

In an implement example of the present application, the thickness of the primer layer may be about 0.1 µm to about 5 µm. Specifically, the thickness of the primer layer may be about 0.1 µm to about 5 µm, about 0.1 µm to about 4 µm, about 0.1 µm to about 3 µm, about 1 µm to about 5 µm, about 1 µm to about 4 µm, or about 1 µm to about 3 µm, but is not limited thereto.

In an implement example of the present application, the thickness of the first adhesive layer, the second adhesive layer, or the third adhesive layer may be about 1 µm to about 10 µm. Specifically, the thickness of the first adhesive layer, the second adhesive layer, or the third adhesive layer may be about 1 µm to about 10 µm, about 1 µm to about 8 µm, about 1 µm to about 6 µm, about 1 µm to about 4 µm, about 3 µm to about 10 µm, about 5 µm to about 10 µm, about 7 µm to about 10 µm, about 3 µm to about 7 µm, about 4 µm to about 6 µm, or about 1 µm to about 3 µm, but is not limited thereto.

In an implement example of the present application, the thickness of the surface layer may be about 10 µm to about 30 µm. Specifically, the thickness of the surface layer may be about 10 µm to about 30 µm, about 15 µm to about 30 µm, about 20 µm to about 30 µm, about 25 µm to about 30 µm, about 15 µm to about 25 µm, about 15 µm to about 20 µm, or about 20 µm to about 25 µm, but is not limited thereto.

In an implement example of the present application, the thickness of the inner resin layer may be about 10 µm to about 30 µm. Specifically, the thickness of the inner resin layer may be about 10 µm to about 30 µm, about 15 µm to about 30 µm, about 20 µm to about 30 µm, about 25 µm to about 30 µm, about 15 µm to about 25 µm, about 15 µm to about 20 µm, about 20 µm to about 25 µm, or about 10 µm to about 20 µm, but is not limited thereto.

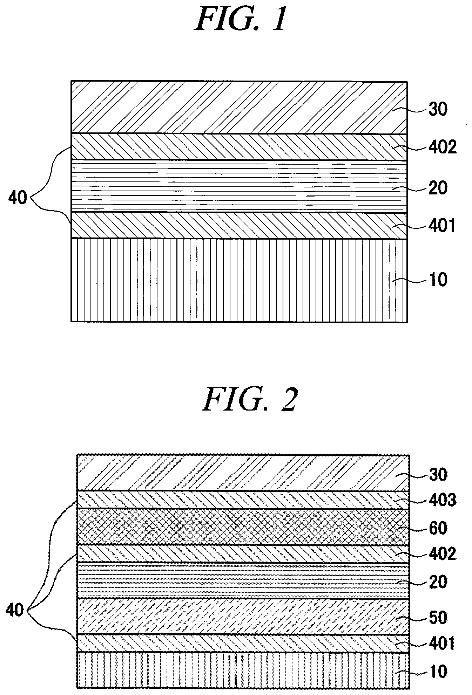

Referring to FIG. 1, the small secondary battery pouch film according to an implement example of the present application may be configured of a sealant layer 10 having a thickness of about 40 µm to about 100 µm, a primer layer 50 having a thickness of about 0.1 µm to about 5 µm, an core layer 20 having a thickness of about 12 µm to about 60 µm, a first adhesive layer 401 or a second adhesive layer 402 having a thickness of about 1 µm to about 10 µm, and a surface layer 30 having a thickness of about 15 µm to about 30 µm. While the related art has a problem of cracking or bursting even if the core layer having a thickness of 40 µm is configured, in an implement example of the present application, there is an advantage that the secondary battery pouch can be implemented even if the core layer has a thickness of at least 12 µm without any problem. In addition, as an implement example, in a case where the CPR film is used as the sealant layer, the thickness of the sealant layer may be 40 µm to 100 µm, and in a case where the CPP film is used as the sealant layer, the thickness of the sealant layer may be 60 µm to 100 µm. In addition, referring to FIG. 2, the same effects can also be achieved even in a secondary battery pouch film for a medium or large size, which further includes an inner resin layer 60 formed on the second adhesive layer and a third adhesive layer 403 on the inner resin layer.

In each of FIG. 1 and FIG. 2, the secondary battery pouch film is configured of the sealant layer 10; the primer layer 50; the core layer 20; the surface layer 30; and the sealant layer 10, the primer layer 50, the c ore layer 20, the inner resin layer 60, and the surface layer 30, but this i s only an example. Including an additional layer that may be used in the film for a secondary battery pouch, or including less, may be also include d in the exemplary embodiment of the present disclosure as long as it do es not depart from the scope of the technical idea of the present applicati on. As an example, the secondary battery pouch film may be configured of 5 layers, 7 layers, 9 layers, or 11 layers, including additional layers tha t can be used in the secondary battery pouch, and may be configured of 2 layers including layers less than those layers described above.

In an implement example of the present application, the graphene may increase the durability of the entire secondary battery pouch film and reduce gas permeability and moisture permeability thereof.

In an implement example of the present application, at least one layer from the first adhesive layer, the second adhesive layer and third adhesive layer may include the graphene, and the content of the graphene may be 0.005 parts by weight to 10 parts by weight with respect to 100 parts by weight of each of the first adhesive layer, the second adhesive layer, and the third adhesive layer. If the content of the graphene is less than 0.005 parts by weight, the effect of increasing the durability of the secondary battery pouch film is insignificant, and the durability thereof appears as that in the related art. If the content of graphene exceeds 10 parts by weight, there is a problem that the durability is lowered and the adhesive strength of the adhesive layer decreases. Specifically, the content of the graphene may be 0.005 parts by weight to 10 parts by weight, 0.005 parts by weight to 5 parts by weight, 0.005 parts by weight to 3 parts by weight, 0.005 parts by weight to 2 parts by weight, 0.01 parts by weight to 2 parts by weight, 0.01 parts by weight to 1.5 parts by weight, 0.05 parts by weight to 1.5 parts by weight, or 0.1 parts by weight to 1.5 parts by weight with respect to100 parts by weight of each of the first adhesive layer, the second adhesive layer, and the third adhesive layer.

In an implement example of the present application, the sealant layer may include the graphene, and the content of the graphene may be 0.005 parts by weight to 10 parts by weight with respect to 100 parts by weight of the sealant layer. If the content of graphene is less than 0.005 parts by weight, the effect of increasing the durability of secondary battery pouch film is insignificant, and the durability thereof appears as that in the related art. If the content of graphene exceeds 10 parts by weight, there is a problem that the durability thereof is rather reduced compared to that of the related art. Specifically, the content of the graphene may be 0.005s parts by weight to 10 parts by weight, 0.005 parts by weight to 5 parts by weight, 0.005 parts by weight to 3 parts by weight, 0.005 parts by weight to 2 parts by weight, 0.01 parts by weight to 1.5 parts by weight, 0.05 parts by weight to 1.5 parts by weight, or 0.1 parts by weight to 1.5 parts by weight with respect to 100 parts by weight of the sealant layer.

In an implement example of the present application, the primer layer may include the graphene, and the content of the graphene may be 0.005 parts by weight to 10 parts by weight with respect to 100 parts by weight of the primer layer. If the content of graphene is less than 0.005 parts by weight, the effect of increasing the durability of secondary battery pouch film is insignificant, and the durability thereof appears as that in the related art. If the content of graphene exceeds 10 parts by weight, there is a problem that the durability thereof is rather reduced compared to that of the related art. Specifically, the content of the graphene may be 0.005s parts by weight to 10 parts by weight, 0.005 parts by weight to 5 parts by weight, 0.005 parts by weight to 3 parts by weight, 0.005 parts by weight to 2 parts by weight, 0.01 parts by weight to 1.5 parts by weight, 0.05 parts by weight to 1.5 parts by weight, or 0.1 parts by weight to 1.5 parts by weight with respect to 100 parts by weight of the primer layer.

In an implement example of the present application, the surface layer may include the graphene, and the content of the graphene may be 0.005 parts by weight to 10 parts by weight with respect to 100 parts by weight of the surface layer. If the content of the graphene is less than 0.005 parts by weight, the effect of increasing the durability of the secondary battery pouch film is insignificant, and the durability thereof appears as that in the related art. If the content of the graphene exceeds 10 parts by weight, there is a problem that the durability thereof is rather reduced compared to that of the related art. Specifically, the content of the graphene may be 0.005 parts by weight to 10 parts by weight, 0.005 parts by weight to 5 parts by weight, 0.005 parts by weight to 3 parts by weight, 0.005 parts by weight to 2 parts by weight, 0.01 parts by weight to 2 parts by weight, 0.01 parts by weight to 1.5 parts by weight, 0.05 parts by weight to 1.5 parts by weight, or 0.1 parts by weight to 1.5 parts by weight with respect to 100 parts by weight of the surface layer.

In an implement example of the present application, the graphene is at least one selected from graphene, graphene oxide (GO), reduced graphene oxide (rGO), and graphene nanoplatelet. Specifically, the graphene oxide includes a plurality of graphene oxide sheets, the reduced graphene oxide includes a plurality of reduced graphene oxide sheets, and each of the plurality of graphene sheets and the plurality of reduced graphene oxide sheets may include an oxygen-containing functional group and/or pinholes. For example, the reduced graphene oxide may be manufactured by obtaining graphene oxide by peroxidating graphite, and by obtaining reduced graphene oxide by reducing the obtained graphene oxide, but is not limited thereto. In the process of peroxidation of the graphite, the oxygen-containing functional groups are generated at an edge of the graphene and an inside of the graphene, and defects occur to generate the pinholes, so that each of the reduced graphene oxide sheets which are finally obtained may include the oxygen-containing functional group and/or the pinholes.

In an implement example of the present application, the oxygen-containing functional group may include one selected from a hydroxyl group, an epoxy group, a carboxyl group, a ketone group, and a group consisting of combinations thereof, but is not limited thereto.

In an implement example of the present application, an interval of a void between the plurality of graphene oxide sheets and the plurality of reduced graphene oxide sheets may be about 1 nm to about 20 nm, but is not be limited thereto.

In the exemplary implement example of the present application, a size of each of the pinholes formed in the graphene oxide sheet and the reduced graphene oxide sheet may be about 0.1 nm to about 10 nm, but is not be limited thereto.

In an implement example of the present application, the sealant layer may include polypropylene (PP) or casting polypropylene (CPP). Specifically, the sealant layer is a portion to which an upper pouch and a lower pouch are bonded by thermal fusion, and the secondary battery pouch may be manufactured by allowing the sealant layers face each other to heat-seal the corners. Polypropylene (PP) or casting polypropylene (CPP) may be used to realize a film with high mechanical strength. Particularly, CCP has excellent flexibility, excellent adhesion, and is similar in tensile strength, elongation, tear strength, or the like to cellophane, but has less gas permeability than that of cellophane, so that it is suitable for use as a secondary battery pouch component. In addition, the polypropylene is colorless, odorless, non-toxic, and hygienic, has an advantage of being inexpensive due to its lowest specific gravity among plastics, and is suitable for use as the secondary battery pouch component due to its good resistance against gas permeability.

In an implement example of the present application, the core layer may include an aluminum foil or an aluminum deposition layer, but is not limited thereto.

In an implement example of the present application, the primer layer may include modified polyethylene (modified PE), modified polypropylene (modified PP), or modified acrylic resin. The primer layer means that adhesive resin that is easily adhered to aluminum is coated to facilitate the adhesion between an aluminum component of the core layer and the sealant layer. In a case of a battery requiring heat resistance, polypropylene resin is usually used as a material of the sealant layer. In this case, since the aluminum component of the core layer does not immediately adhere the polypropylene resin during melt extrusion coating, the adhesive resin is coated to facilitate the attachment.

In an implement example of the present application, each of the first adhesive layer, the second adhesive layer, and the third adhesive layer may include a polyurethane-based adhesive, an acrylic adhesive, an epoxy-based adhesive, a polyolefin-based adhesive, an elastomer-based adhesive, or a fluorine-based adhesive. Since when the battery is moved in an inner package cell, high temperature is generated due to heat generation, at this time, in a case of an adhesive having poor heat resistance, an inter-layer separation phenomenon occurs, and therefore, an adhesive component having excellent heat resistance have to be used.

In an implement example of the present application, the surface la yer may include nylon (NY), polyethylene terephthalate (PET), polypropylen e (PP), or polyamide (PA). As a part that becomes the surface of the se condary battery pouch, the surface layer protects the surface of the pouch , and can be made of a material having high thermal conductivity and low electrical conductivity, and nylon (NY), polyethylene terephthalate (PET), polypropylene (PP) or polyamide (PA) can be used. Nylon 6, 11, 12, 66, a nd 610 etc are commercialized as nylon, but nylon 6 is suitable as the c asting film and has advantages of better mechanical strength than those o f other films, less deterioration in strength at low temperature, and excelle nt pinhole resistance, and less gas permeability.

In an implement example of the present application, the inner resin layer may include polyolefin such as nylon (NY), poly ethylene (PE), or poly propylene (PP), or a copolymer thereof, but is not limited thereto. The inner resin layer provides properties required as the secondary battery pouch film, such as good heat sealability, moisture-proof property, and heat resistance, and has advantages in processability such as lamination.

In an implement example of the present application, a depth of the molding burst of the secondary battery pouch film may be greater than 8.6 mm and less than 9.5 mm. Specifically, the secondary battery pouch film may have increased durability by containing the graphene in at least one layer from the sealant layer, primer layer, the inner resin layer, the first adhesive layer, the second adhesive layer, the third adhesive layer, and the surface layer includes graphene. Accordingly, in a case where the secondary battery pouch film is pressed after being formed, the secondary battery pouch film may have durability that does not burst even if a depth thereof being tolerated increases. More specifically, the depth of the molding burst may be greater than 8.6 mm and less than 9.5 mm; greater than 8.6 mm and less than 9.5 mm; greater than 9.0 mm and less than 9.5 mm; or greater than 9.1 mm and less than 9.5 mm.

A second aspect of the present application is to provide a method for manufacturing the secondary battery pouch film of the first aspect, including: forming each of a sealant layer, a core layer, and a surface layer; and laminating the sealant layer, the core layer, and the surface layer in order, wherein a first adhesive layer and a primer layer are included between the sealant layer and the core layer, and a second adhesive layer is included between the core layer and the surface layer, and wherein at least one layer from the sealant layer, the primer layer, the first adhesive layer, the second adhesive layer, and the surface layer includes graphene.

In the first aspect and the second aspect, contents that may be in common with each other can be applied to both the first aspect and the second aspect even if the description thereof is omitted.

In an implement example of the present application, in the method for manufacturing the secondary battery pouch film, further including: forming an inner resin layer; and laminating the sealant layer, the core layer, the inner resin layer, and the surface layer in order. A first adhesive layer and a primer layer may be included between the sealant layer and the core layer, a second adhesive layer may be included between the core layer and the surface layer, the inner resin layer may be formed on the second adhesive layer between the second adhesive layer and the surface layer, and the third adhesive layer may be formed on the inner resin layer.

In an implement example of the present application, forming each of the sealant layer, the inner resin layer, and the surface layer may include melting the raw material of each of the sealant layer, the inner resin layer, and the surface layer at a temperature of 230°C to 250°C, and extruding the melted material at an extrusion amount of 700kg/h to 1000 kg/h to supply to a T-die, casting the melted material to be processed. In this case, when describing an average thickness of each thereof, the sealant layer may be formed to be about 40 µm to about 100 µm; the inner resin layer and the surface layer may be formed to be about 10 µm to about 30 µm, but is not limited thereto.

In an implement example of the present application, the thickness of the core layer may be about 5 µm to about 60 µm. Specifically, the thickness of the core layer may be about 5 µm to about 60 µm, about 12 µm to about 60 µm, about 12 µm to about 55 µm, about 12 µm to about 50 µm, about 12 µm to about 45 µm, about 12 µm to about 40 µm, about 12 µm to about 35 µm, about 12 µm to about 30 µm, about 15 µm to about 60 µm, about 20 µm to about 60 µm, about 25 µm to about 60 µm, about 30 µm to about 60 µm, about 20 µm to about 50 µm, about 25 µm to about 50 µm, about 30 µm to about 50 µm, about 35 µm to about 45 µm, or about 40 µm to about 45 µm, but is not limited thereto.

In an implement example of the present application, the forming the core layer includes processing aluminum into a plate shape by allowing a raw material (strip) containing aluminum to pass between two rolls rotating at a recrystallization temperature or lower. At this time, the operation may be repeated 1 to 5 times depending on a desired thickness. In addition, the process may include forming the core layer to have an average thickness of 12 µm to 60 µm.

In an implement example of the present application, the laminating may include dry lamination, but is not limited thereto. Specifically, the first adhesive layer may be formed through the dry lamination to increase viscosity by applying a first adhesive to one or more of the sealant layer and the core layer, and volatilizing a diluted solvent in a space such as a drying chamber. The second adhesive layer may be formed through the dry lamination to increase viscosity by applying a second adhesive to one or more of the core layer and the surface layer, and volatilizing a dilute solvent in a space such as a drying chamber. In addition, the third adhesive layer may be formed through the dry lamination to increase viscosity by applying a third adhesive to one or more of the inner resin layer and the surface layer, and volatilizing a dilute solvent in a space such as a drying chamber.

Hereinafter, the present application will be described in more detail with reference to examples, but the present application is not limited thereto.

### [Examples]

### 1. Example

### 1-1. Formation of Sealant Layer and Surface Layer

Polypropylene and nylon resin were prepared, melted at 240°C, extruded at an extrusion amount of 800 kg/h, and supplied to a T-die. Thereafter, polypropylene melt was casted and processed to form a sealant layer having an average thickness of 40 µm to 80 µm, and the nylon resin melt was casted and processed to form a surface layer having an average thickness of 55 µm to 30 µm.

### 1-2. Formation of Core Layer

An aluminum raw material (strip) was prepared and passed between two rolls rotating at a temperature of the recrystallization temperature or lower, and aluminum was processed into a plate shape to form an core layer having an average thickness of 35 µm to 40 µm.

### 1-3. Formation of Secondary Battery Pouch Film

The laminated secondary battery pouch film having an average thickness of 90 µm to 185 µm was formed by disposing the sealant layer, the core layer, and the surface layer in order in a roller for lamination, actuating the roller, and taking the sealant layer, the core layer, and the surface layer into the rollers in order. In addition, a primer layer was included between the sealant layer and the core layer. The adhesive used for the laminate was an acrylic adhesive, and the adhesive containing 0.01 parts by weight of graphene with respect to 100 parts by weight of the entire adhesive was used.

### 2. Comparative Example 1

A secondary battery pouch film was synthesized under the same conditions as those in the example described above, except that the core layer had a thickness of 50 µm and the adhesive component did not contain graphene.

### 3. Comparative Example 2

A secondary battery pouch film was synthesized under the same conditions as those in the example described above, except that the core layer had a thickness of 40 µm and the adhesive component did not contain graphene.

### Experimental Example 1: Comparison of Durability of Secondary Battery Pouch Film Containing Graphene and Related Art

As a result of confirming the bursting properties of the secondary battery pouch film of Example, Comparative Example 1, and Comparative Example 2 manufactured as described above, Comparative Example 1 in which the thickness of the core layer was 50 µm and the Example in which the thickness of the core layer was 35 µm to 40 µm were confirmed to have shielding properties such as moisture and oxygen. However, in Comparative Example 2 in which the thickness of the core layer was 40 µm, it was confirmed that cracks were confirmed on the surface, and the shielding properties were low, such as moisture and oxygen. Therefore, it was confirmed that Example containing graphene had an effect of increasing durability and shielding property that can implement a completely retorted food packaging material even if the core layer is formed thin, and it was confirmed that there was an advantage of remarkably reducing the amount of aluminum used.

### Experimental Example 2: Comparison of Durability of Secondary Battery Pouch Film Containing Graphene and Related Art by Measuring Depth of Molding Burst

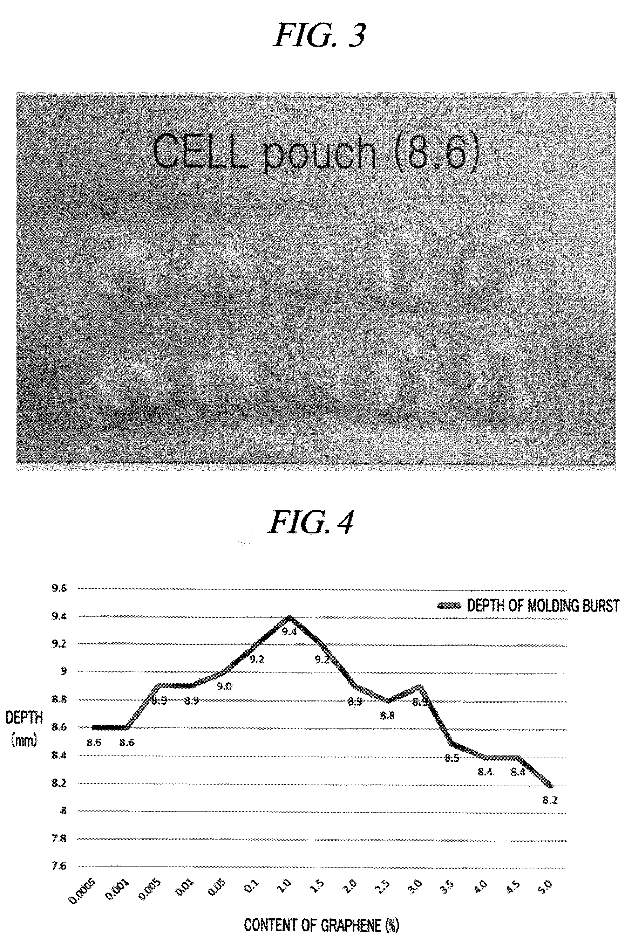

A secondary battery pouch film was prepared in the same manner as that in the example described above, and a difference in effect according to the content of graphene was confirmed. Specifically, in the adhesive layer, 0.0005 parts by weight, 0.001 parts by weight, 0.005 parts by weight, 0.01 parts by weight, 0.05 parts by weight, 0.1 parts by weight, 1.0 parts by weight, 1.5 parts by weight, 2.0 parts by weight, 2.5 parts by weight, 3.0 parts by weight, 3.5 parts by weight, 4.0 parts by weight, 4.5 parts by weight, 5.0 parts by weight of graphene with respect to the total 100 parts by weight of the entire adhesive were added to manufacture a secondary battery pouch film. Then, the effect depending on the graphene content was confirmed by measuring the depth of the molding burst where the secondary battery pouch film began to burst. The depth of the molding burst means a depth at which the sheet can withstand without rupture when pressing is applied. The depth of the molding burst was determined by comparison based on the related art already available on the market, and the depth of the molding burst of the commercially available sheet was 8.6 mm. The results are illustrated in Table 1 below and Fig.4 .

**[Table 1]**

| Content of Graphene | Specification | Depth of Molding Burst |
|---|---|---|
| 0.0005 | | 8.6 |
| 0.001 | | 8.6 |
| 0.005 | | 8.9 |
| 0.01 | | 8.9 |
| 0.05 | | 9.0 |
| 0.1 | 1) NY25 / ■ / AL40 / CPP40 2) NY25 / AL40 / ■ / CPP40 3) NY25 / ■ / AL40 / ■ / CPP40 | 9.2 |
| 1.0 | | 9.4 |
| 1.5 | | 9.2 |
| 2.0 | | 8.9 |
| 2.5 | | 8.7 |
| 3.0 | | 8.9 |
| 3.5 | | 8.5 |
| 4.0 | | 8.4 |
| 4.5 | | 8.4 |
| 5.0 | | 8.2 |

As a result of confirming the result of the molding burst, when the content of the graphene was 0.0005 parts by weight and 0.001 parts by weight, the depth of the molding burst of secondary battery pouch film appeared to be 8.6 mm, it was confirmed that the depth was the same as that of the molding burst of the related art, and confirmed that it showed equivalent performance to that of the existing product when the content of the graphene was 0.001 parts by weight or lower. In addition, when the content of the graphene was 3.5 parts by weight to 5 parts by weight, it was confirmed that the depth of the molding burst of the secondary battery pouch film was 8.5 mm or lower, thereby confirming lower performance appeared than that of the standard of the existing product when the content of the graphene was 3.5 parts by weight or more. On the other hand, when the content of the graphene was 0.005 to 3.0 parts by weight, the depth of the molding burst exceeding 8.6 mm appeared, and a depth up to 9.4 mm (1 part by weight) was measured, thereby confirming that the effect of improving durability superior to the existing product was realized depending on the addition of graphene.

In addition, in Experimental Examples 1 and 2, only a case where graphene was contained in the adhesive was confirmed, but the results confirmed that the same effect appeared even in a case where the graphene was contained in the sealant layer, the primer layer, the inner resin layer or the surface layer.

The foregoing description of the present application is for illustrative purposes only, and those ordinary skilled in the art to which the present application pertains will be able to understand that it is possible to easily transform it into other specific forms without changing the technical spirit or essential features of the present application. Therefore, it should be understood that the examples described above are illustrative in all respects and not limiting. For example, each component described as a single type may be implemented in a distributed manner, and similarly, components described as being distributed may also be implemented in a combined form.

The scope of the present application is indicated by the claims to be described later rather than the detailed description, and all changes or modified forms derived from the meaning and scope of the claims, and equivalent concepts thereof should be interpreted as being included in the scope of the present application.

### <Description of symbols>

10: sealant layer
20: core layer
30: surface layer
40: adhesive layer
401: first adhesive layer
402: second adhesive layer
403: third adhesive layer
50: primer layer
60: inner resin layer

## Claims

1. A secondary battery pouch film, comprising:
a sealant layer;
a first adhesive layer formed on the sealant layer;
a primer layer formed on the first adhesive layer;
a core layer formed on the primer layer;
a second adhesive layer formed on the core layer; and
a surface layer formed on the second adhesive layer,
wherein at least one layer from the sealant layer, the primer layer, the first adhesive layer, the second adhesive layer, and the surface layer includes graphene.

2. The secondary battery pouch film according to claim 1, further comprising:
an inner resin layer formed on the second adhesive layer and a third adhesive layer formed on the inner resin layer between the second adhesive layer and the surface layer,
wherein each or both of the inner resin layer and the third adhesive layer includes graphene.

3. The secondary battery pouch film according to claim 1,
wherein the core layer has a thickness of 12 µm to 80 µm.

4. The secondary battery pouch film according to claim 1,
wherein the graphene increases a durability, and reduces gas permeability and moisture permeability of the secondary battery pouch film.

5. The secondary battery pouch film according to claim 1,
wherein each or both of the first adhesive layer and the second adhesive layer includes the graphene, and
wherein a content of the graphene is 0.005 parts by weight to 10 parts by weight with respect to 100 parts by weight of each of the first adhesive layer and the second adhesive layer.

6. The secondary battery pouch film according to claim 1,
wherein the sealant layer includes the graphene, and
wherein a content of the graphene is 0.005 parts by weight to 10 parts by weight based on 100 parts by weight of the sealant layer.

7. The secondary battery pouch film according to claim 1,
wherein the primer layer includes the graphene, and
wherein a content of the graphene is 0.005 parts by weight to 10 parts by weight based on 100 parts by weight of the primer layer.

8. The secondary battery pouch film according to claim 1,
wherein the surface layer includes the graphene, and
wherein a content of the graphene is 0.005 parts by weight to 10 parts by weight based on 100 parts by weight of the surface layer.

9. The secondary battery pouch film according to claim 2,
wherein the inner resin layer includes the graphene, and
wherein a content of the graphene is 0.005 parts by weight to 10 parts by weight based on 100 parts by weight of the inner resin layer.

10. The secondary battery pouch film according to claim 1,
wherein the graphene is at least one selected from graphene, graphene oxide (GO), reduced graphene oxide (rGO), graphene nanoplatelet.

11. The secondary battery pouch film according to claim 1,
wherein the core layer includes an aluminum foil or an aluminum deposition layer.

12. A method for manufacturing the secondary battery pouch film according to claim 1, comprising:
forming each of a sealant layer, a core layer, and a surface layer; and
laminating the sealant layer, the core layer, and the surface layer in order,
wherein a first adhesive layer and a primer layer are included between the sealant layer and the core layer, and a second adhesive layer is included between the core layer and the surface layer, and
wherein at least one layer from the sealant layer, the primer layer, the first adhesive layer, the second adhesive layer, and the surface layer includes graphene.

13. The method for manufacturing the secondary battery pouch film according to claim 12,
wherein the core layer has a thickness of 12 µm to 80 µm.
